# EUROPÄISCHE PATENTSCHRIFT

(11) **EP 4 088 268 B1**
(45) Veröffentlichungstag und Bekanntmachung des Hinweises auf die Patenterteilung: **08.07.2026**
(21) Anmeldenummer: 21701628.6
(22) Anmeldetag: 07.01.2021
(51) Int. Cl.: G09B 9/00, G09B 9/02

(54) **MODULARER SIMULATIONSRAUM**
MODULAR SIMULATION ROOM
SALLE DE SIMULATION MODULAIRE

(30) Priorität: 10.01.2020 DE 102020100464
(43) Veröffentlichungstag der Anmeldung: 16.11.2022
(73) Patentinhaber: KNDS Deutschland GmbH & Co. KG, 80997 München (DE)
(72) Erfinder: PABST, Manuel, 80997 München (DE); HAUBNER, Michael Dr., 80997 München (DE)
(74) Vertreter: Feder Walter Ebert
(86) Internationale Anmeldenummer: PCT/DE2021/100003
(87) Internationale Veröffentlichungsnummer: WO 2021/139855

(56) Entgegenhaltungen:
- DE-C2- 19 780 550
- US-A1- 2008 016 970
- US-A1- 2019 278 882
- BENGLER KLAUS: "Von der Limousine zum Lkw in wenigen Stunden", 20 July 2015 (2015-07-20), pages 1 - 4, XP055784814, Retrieved from the Internet <URL:https://www.tum.de/nc/die-tum/aktuelles/pressemitteilungen/details/32526/> [retrieved on 20210311]

## Beschreibung

Die vorliegende Erfindung betrifft einen modularen Simulationsraum zur Simulation eines Fahrzeuginneren, insbesondere eines militärischen Fahrzeugs, mit mehreren Wandmodulen zur Begrenzung eines Simulationsbereichs im Simulationsraum. Ein weiterer Gegenstand der Erfindung bildet ein Verfahren zum Betrieb eines solchen Simulationsraums.

Die Erfindung findet Einsatz bei Simulationen eines Fahrzeuginneren, insbesondere eines militärischen Fahrzeugs, wie sie beim Training von Besatzungsmitgliedern des Fahrzeugs zur initialen Erstausbildung oder zur Auffrischung und weiteren Einprägung bereits ausgebildeter Abläufe bei der Bedienung des Fahrzeugs zur Anwendung kommen. Zum anderen werden solche Simulationsräume auch bei der Konzeptionierung oder der Weiterentwicklung des Fahrzeuginneren im Rahmen eines insbesondere herstellerseitigen Designprozesses genutzt.

Die im Simulationsraum erfolgende Simulation des Fahrzeuginneren gestattet es, das Training oder den Designprozess durchzuführen, ohne hierzu ein reales Fahrzeug einsetzen zu müssen. Im Vergleich zu einem realen Fahrzeug ist die Simulation deutlich flexibler und lässt sich einfacher als das reale Fahrzeuginnere verändern und anpassen. Insbesondere bei einem Designprozess, in dessen Rahmen das Fahrzeuginnere konzeptioniert oder weiterentwickelt und somit verändert werden soll, wirkt sich die Flexibilität einer Simulation positiv aus.

Um den Fahrzeuginnenraum bei einer solchen Simulation, insbesondere auch in seinen Abmessungen, wiedergeben zu können, weisen beispielsweise Simulator-Kabinen einen Simulationsraum auf, in welchem der Fahrzeuginnenraum eines einzelnen Fahrzeugtyps ganz oder abschnittsweise realitätsgetreu nachgebaut ist, d. h. in genauer Form und Abmessungen dem Fahrzeuginnenraum entspricht. Der Simulationsbereich, d. h. jener Bereich eines Simulationsraums, welcher das Fahrzeuginnere zur Simulation nachbildet und in welchem sich beispielsweise das Besatzungsmitglied bei Training bewegen kann, entspricht bei solchen Simulator-Kabinen in seinen Abmessungen dem Fahrzeuginnenraum. Derartige Simulationsräume einer Simulator-Kabine sind jedoch sehr kostspielig, aufwendig in der Produktion und benötigen viel Platz. Zudem kann es erforderlich sein, dass für jede Besatzungsposition im realen Fahrzeug, wie Kommandant, Fahrer oder Richtschütze, eine eigene Simulator-Kabine mit einem eigenem Simulationsraum angeschafft werden muss.

Eine preiswerte und flexible Alternative hierzu stellen modulare Simulationsräume dar. Diese umfassen mehrere Wandmodule, welche innerhalb des Simulationsraums manuell positioniert werden können, um den Simulationsbereich im Simulationsraum derart zu begrenzen, dass der Simulationsbereich in seinen Abmessungen an die Abmessungen des Fahrzeuginneren angenähert wird. Bei den Wandmodulen kann es sich beispielsweise um einfache Trennwände handeln, welche im Simulationsraum verschoben und auf diese Weise vor der Simulation positioniert werden können. Bei diesen modularen Simulationsräumen kann der Simulationsbereich mittels der Wandmodule an das Fahrzeuginnere unterschiedlicher Fahrzeugtypen angepasst werden. Anders als der realitätsgetreue Nachbau im Simulationsraum einer Simulator-Kabine lässt sich das Fahrzeuginnere mit einem solchen modularen Simulationsraum nur grob annähern und so nachbilden. Beispielsweise kann die Grundfläche des Simulationsbereichs durch die Trennwände auf die Grundfläche des Fahrzeuginneren begrenzt werden, ohne dass die nähere Form des Fahrzeuginneren, zum Beispiel ein sich entlang der Höhe ver-ändernder Durchmesser des Fahrzeuginneren, durch den Simulationsraum wiedergegeben wird. Da modulare Simulationsräume an unterschiedlichen Fahrzeugtypen anpassbar sind, lassen sich Kosten und benötigter Platz einsparen, da der gleiche Simulationsraum zur Simulation unterschiedlicher Fahrzeugtypen eingesetzt werden kann. Jedoch ist die manuell erfolgende Positionierung der einzelnen Wandmodule zeitaufwendig und mühselig, da die relativen Positionen der einzelnen Wandmodule zueinander bei der Nachbildung des Fahrzeuginneren stetig überprüft und korrigiert werden muss. Ein Beispiel eines modularen Simulationsraums mit Aktuatoren wird in der Patentanmeldung US 2019/278882 A1 offenbart.

Die **Aufgabe** der vorliegenden Erfindung liegt daher darin, einen schneller und einfacher an unterschiedliche Fahrzeugtypen anpassbaren Simulationsraum anzugeben. Die Erfindung ist im beigefügten Anspruchssatz beschrieben.

Diese Aufgabe wird bei einer Vorrichtung der eingangs genannten Art dadurch **gelöst**, dass die Wandmodule Aktuatoren zur, insbesondere translatorischen, Positionsveränderung simulationsbereichsseitiger Wandelemente der Wandmodule im Simulationsraum aufweisen.

Das Wandelement des einzelnen Wandmoduls ist der dem Simulationsbereich zugewandte Endbereich des Wandmoduls. Die Wandelemente der Wandmodule begrenzen gemeinsam den Simulationsbereich innerhalb des Simulationsraums. Auf diese Weise bilden die Wandelemente eine Innenwand des Simulationsraums. Das Wandelement ist simulationsrauminnenseitig an mindestens einem Aktuator des Wandmoduls angeordnet. Die Aktuatoren der Wandmodule ermöglichen eine schnelle und einfache Änderung der Position der Wandelemente innerhalb des Simulationsraums. Der von den Wandelementen begrenzte Simulationsbereich des Simulationsraums kann auf diese Weise zur Nachbildung von Fahrzeuginnenräumen unterschiedlicher Fahrzeugtypen schnell und einfach verändert werden kann.

Die Position der Wandelemente ist dabei jener Ort, an welchem sich das Wandelement im Simulationsraum befindet. Die Position kann beispielsweise über Koordinaten in einem Koordinatensystem angegeben werden. Hingegen entspricht die Lage des Wandelements dessen Orientierung im Raum, d. h. jener räumlichen Ausrichtung, welche es an seiner Position einnimmt.

Die Wandmodule können an einer Seitenwand, allen Seitenwänden, der Decke und/oder dem Fußboden des Simulationsraums angeordnet sein. Sowohl eine Seitenwand als auch die Decke und der Fußboden des Simulationsraums sind Wände des Simulationsraums. Diese Wände können insbesondere die den Simulationsraum nach außen hin beschränkende Außenwände des Simulationsraums sein. Insbesondere können sie die Seitenwand, alle Seitenwände, die Decke und/oder den Fußboden flächig bedecken. Die einzelnen Wandmodule können aneinander angrenzend an einer Wand, der Decke und/oder dem Fußboden angeordnet sein. Insbesondere die Wandelemente können dabei an benachbarte Wandelemente angrenzen. Die Wandelemente aneinander angrenzender Wandmodule können zumindest eine Position einnehmen, in welcher sie lediglich durch einen schmalen, vorzugsweise im Millimeterbereich liegenden, Spalt voneinander getrennt sind, so dass die Wandelemente relativ zueinander bewegt werden können, ohne aneinander zu reiben.

Vorzugsweise ist je ein Aktuator zur translatorischen Positionsveränderung pro Wandelement, insbesondere zum Ausfahren des Wandelements, vorgesehen.

In einer Weiterbildung der Erfindung ist vorgesehen, dass die Aktuatoren als Teleskopelement ausgebildet sind. Teleskopelemente ermöglichen eine einfache lineare Positionsveränderung entlang einer Translationsachse des Aktuators. Teleskopelemente sind in ihrer Länge veränderbar. Hierzu weisen sie zumeist zwei gegeneinander bewegbare und ineinander schiebbare Komponenten auf. Die Teleskopelemente können als elektrisch, hydraulisch, pneumatisch und/oder piezoelektrisch angetriebene Teleskopelemente ausgebildet sein. Elektrisch angetriebene Teleskopelemente können Servomotoren, Linearmotoren oder Teleskopspindelantriebe umfassen. Die Aktuatoren können eine Kombination aus unterschiedlichen Teleskopelementen sein, insbesondere können Teleskopelemente unterschiedlichen Antriebtyps bei unterschiedlichen Wandmodulen zum Einsatz kommen. So können beispielsweise hydraulische und/oder pneumatische Teleskopelemente bei größeren Wandelementen und/oder bei eine im Vergleich zu anderen Wandelementen größere Last tragenden Wandelementen eingesetzt werden.

Bevorzugt sind die Aktuatoren an einer Wand des Simulationsraums angeordnet. Bei der Wand des Simulationsraums kann es sich um die Außenwand des Simulationsraums handeln, an dessen Innenseite die Aktuatoren angeordnet sind. Über die Aktuatoren können die Wandelemente auf diese Weise relativ zur Wand des Simulationsraums in diesem positioniert werden.

Insbesondere kann ein Aktuator je Wandmodul an der Wand des Simulationsraums, insbesondere unmittelbar, angeordnet sein.

In einer vorteilhaften Ausgestaltung sind die Wandmodule neigbar, insbesondere um je zwei im Wesentlichen orthogonale Achsen. Die Wandmodule können durch ein Neigen bei der Positionierung im Simulationsraum zusätzlich in ihrer Lage verändert werden. Auf diese Weise können die Wandmodule schräge Flächen im Fahrzeuginnenraum besser nachbilden und ein auftretender Treppenstufeneffekt, das sogenannte haptische Aliasing, kann bei der Simulation reduziert werden. Die Neigung der Wandmodule kann durch ein manuelles Einwirken oder über Aktuatoren erfolgen. Bei neigbaren Wandmodulen sind vorzugsweise die Wandelemente, insbesondere relativ zum Aktuator, neigbar ausgebildet. Eine Neigbarkeit um zwei im Wesentlichen orthogonale Achse kann eine weitgehend freie Lageänderung ermöglichen. Die Achsen können zueinander beabstandet sein oder sich kreuzen. Vorzugsweise verlaufen die Achsen quer zur Translationsachse des Aktuators. Zur Neigung um zwei im Wesentlichen orthogonale und sich kreuzende Achsen kann das Wandmodul ein Kugelgelenk aufweisen.

Eine weitere Ausgestaltung der Erfindung sieht vor, dass die Wandmodule Marker zur Positionsbestimmung aufweisen. Mittels eines Markers kann die Position und/oder die Lage des Wandmoduls auf einfache Weise bestimmt werden. Der Marker kann insbesondere am Wandelement des Wandmoduls angeordnet sein, um dessen Lage und/oder Position im Simulationsraum bestimmen zu können. Hierzu kann beispielsweise ein Sensorsystem innerhalb des Simulationsraums den Marker erfassen. Anhand der erfassten Position des Wandelements kann überprüft werden, ob der Simulationsbereich das Fahrzeuginnere mit einer ausreichenden Genauigkeit nachbildet oder ob die Position und/oder Lage der Wandelemente zur Genauigkeitssteigerung verändert werden muss.

In vorteilhafter Weise ist der Marker im für das menschliche Auge sichtbaren elektromagnetischen Spektralbereich nicht erkennbar. Insbesondere kann es sich um eine nur im Infrarot-Bereich erkennbaren Marker handeln.

Ferner kann der Marker als zweidimensionaler Marker und/oder nach Art einer farblichen Markierung ausgebildet sein. Der zweidimensionale Marker kann nach Art eines QR-Codes ausgebildet sein. Eine als farbliche Markierung ausgebildeter Marker kann einfarbig ausgestaltet sein. Die farbliche Markierung kann alternativ oder zusätzlich das Wandelement simulationsbereichsseitig ganzflächig bedecken.

Insbesondere bei einem Simulationsraum für eine teilweise virtuelle Simulation kann die über ein Sensorsystem des Simulationsraums erkannte Position des Wandelements mit den Grenzen der virtuellen Darstellung des Fahrzeuginneren verglichen werden. Bei einer solchen teilweise virtuellen Simulation wird dem Besatzungsmitglied eine virtuelle Umgebung, insbesondere eine virtuelle Darstellung des Fahrzeuginneren, über eine kopffeste Anzeigevorrichtung angezeigt. Das Besatzungsmitglied kann sich innerhalb des Simulationsbereichs bewegen, wobei die Darstellung der virtuellen Umgebung auf der Anzeigevorrichtung entsprechend der Position der Anzeigevorrichtung nach Art einer VR-Brille angepasst wird. Die Wandelemente können derart positioniert werden, dass sie mit den Grenzen der virtuellen Darstellung des Fahrzeuginneren, d. h. der virtuellen Darstellung der Fahrzeuginnenwand, im Wesentlichen in Deckung gebracht werden. Der Simulationsbereich kann auf diese Weise an die Abmessungen der virtuellen Umgebung angepasst werden. Die in ihrer Position an die virtuelle Umgebung angepassten Wandmodule können eine physische Begrenzung der virtuellen Umgebung bereitstellen, indem das Besatzungsmitglied die virtuelle Umgebung sieht, hinsichtlich seiner Bewegungsfreiheit jedoch durch die Wandmodule beschränkt wird.

Ferner können die Wandmodule matrixartig angeordnet sein. Die in einer Matrix, d. h. nach Art von Zeilen und Spalten angeordneten Wandmodule können eine Wand, die Decke und/oder den Fußboden des Simulationsraums flächendeckend ausfüllen.

In einer vorteilhaften Ausgestaltung kann das Wandmodul mehrere, insbesondere matrixartige angeordnete, Wandelemente aufweisen. Die Wandelemente können eine polygonale, insbesondere eine quadratische, rechteckige, pentagonale, hexagonale oder heptagonale, simulationsbereichsseitige Fläche aufweisen. Die Wandmodule des Wandelements können in einer regelmäßigen Struktur angeordnet sein. Insbesondere quadratische oder rechteckige Wandelemente können matrixartig, d. h. nach Art von Zeilen und Spalten angeordnet sein. In diesem Zusammenhang hat sich insbesondere eine quadratische Anordnung, insbesondere eine 2x2-, 3x3- oder 4x4-Anordnung, als vorteilhaft erwiesen.

In einer weiteren konstruktiven Ausgestaltung der Erfindung wird vorgesehen, dass die Wandmodule mit mehreren Teilmodulen hierarchisch aufgebaut sind. Das Wandmodul kann mehrere Hierarchieebenen mit je mindestens einem Teilmodul aufweisen. Die Hierarchieebenen können zwischen dem wandseitigen Ende und dem simulationsbereichsseitigen Ende des Wandmoduls hintereinanderliegend angeordnet sein, so dass das Wandmodul zumindest eine wandseitige höchste Hierarchieebene und eine simulationsbereichsseitige niederste Hierarchieebene aufweisen. Zwischen der höchsten Hierarchieebene und der niedersten Hierarchieebene können eine oder mehrere Zwischenhierarchieebenen liegen. Ein hierarchischer Aufbau ermöglicht eine schnellere Positionierung der Wandelemente. Das hierarchische aufgebaute Wandmodul kann durch Hinzufügen einer oder mehrere weiterer Hierarchieebenen auf einfache Weise nachträglich erweitert und so nachgerüstet werden.

Die Teilmodule können ein Abschlusselement aufweisen, welches mittels eines Aktuators positionsveränderbar ist. An dem Abschlusselement des Teilmoduls können Teilmodule der nachfolgenden, niederen Hierarchieebene angeordnet sein. Die Teilmodule können nach Art eines, insbesondere nicht hierarchischen, Wandmoduls ausgebildet sein. Das Abschlusselement des simulationsbereichsseitigen Teilmoduls ist vorteilhafterweise als Wandelement ausgebildet. Je Hierarchieebene kann das Wandmodul Aktuatoren unterschiedlichen Antriebtyps aufweisen. Die Abschlusselemente können ein einfaches Nachrüsten des Simulationsraums ermöglichen. An den Abschlusselementen der niedersten Hierarchieebene kann zur Nachrüstung ein oder mehrere weitere Teilmodule angeordnet werden. Die Teilmodule am simulationsbereichsseitigen Ende des auf diese Weise nachgerüsteten Wandmoduls sind dann Teil der neuen niedersten Hierarchieebene.

Die Teilmodule können in Reihe nacheinander und/oder verschachtelt angeordnet sein. Bei einer verschachtelten Anordnung sind mehrere Teilmodule einer tieferen Hierarchieebene an einem Teilmodul der, insbesondere unmittelbar vorangehenden, höheren Hierarchieebene angeordnet. Vorzugsweise sind die Teilmodule nach Art eines Quadtrees mit vier Teilmodulen pro Teilmodul der nächsthöheren Hierarchieebene aufgebaut.

Die Aktuatoren der Teilmodule einer Hierarchieebene können gleichzeitig bewegt werden. Vorzugsweise werden die Aktuatoren aller Hierarchieebenen gleichzeitig bewegt, d. h. die einzelnen Hierarchieebenen bewegen sich parallel. Alternativ können die Aktuatoren einer Hierarchieebene gleichzeitig, jedoch die einzelnen Hierarchieebenen nacheinander bewegt werden, d. h. die einzelnen Hierarchieebene bewegen sich seriell.

Bevorzugt weisen höhere Hierarchieebenen größere Aktuatoren als niedere Hierarchieebenen auf. Die weiter wandseitig liegenden Teilmodule der höheren Hierarchieebene können auf diese Weise stabiler ausgebildet sein als die Wandmodule niederer Hierarchieebenen. Die größeren Aktuatoren der höheren Hierarchieebenen können einen längeren Aktionsweg aufweisen. In vorteilhafter Weise weisen nur die Aktuatoren der höchsten Hierarchieebene, d. h. die außengelegenen Aktuatoren, einen längeren Aktionsweg auf. Ein größerer Einstellbereich zwischen den Positionen des Abschlusselements bei maximal ausgefahrenem Aktuator und minimal ausgefahrenem Aktuator kann erzielt werden.

Die Aktuatoren der niederen Hierarchieebenen können eine geringere Baugröße und/oder ein geringeres Gewicht als die Aktuatoren der höheren Hierarchieebenen aufweisen. Die von den Aktuatoren der höheren Hierarchieebenen zu bewegende Masse kann reduziert werden.

In einer Weiterbildung der Erfindung weist mindestens ein Wandmodul ein Oberflächenelement zur realitätsgetreuen Nachbildung des Fahrzeuginneren auf. Das Oberflächenelement kann als integraler Bestandteil des Wandmoduls oder als am Wandmodul, insbesondere am Wandelement, anordbares Anbauteile ausgebildet sein. Je Wandelement kann ein Oberflächenelement vorgesehen sein. Das Oberflächenelement kann rund, eckig oder eine andere, insbesondere komplexere, Form aufweisen. Das Fahrzeuginnere lässt sich mittels des Oberflächenelements realitätsgetreuer nachbilden. Das Oberflächenelement kann hierzu einem Teil des Fahrzeuginneren nachgebildet sein.

In einer vorteilhaften Ausgestaltung weist mindestens ein Wandmodul ein Feedbackelement für ein aktives Feedback auf. Ein aktives Feedback kann anders als ein passives Feedback einer lediglich erfühlbaren oder ertastbaren Oberfläche, durch eine Veränderung eines Zustandes oder einer Eigenschaft des Feedbackelements erzielt werden. Durch das Feedback können dem Besatzungsmitglied während der Simulation weitere Sinneseindrücke vermittelt werden. Die Realitätsgetreue der Simulation und damit des Simulationsraums kann gesteigert werden. Vorteilhafterweise können mehrere oder alle Wandmodule insbesondere unterschiedliche Feedbackelemente aufweisen.

Vorzugsweise umfasst das Teilmodul der niedersten Hierarchieebene das Feedbackelement. Insbesondere kann das Feedbackelement ein Bestandteil des Wandelements und/oder des Oberflächenelements sein. Alternativ oder zusätzlich können auch Teilmodule höheren Hierarchieebenen Feedbackelemente aufweisen. Auf diese Weise kann ein Feedbackelement ein einheitliches Feedback für die mit dem Teilmodul verbundenen Teilmodule niederer Hierarchieebenen geben.

Das Feedbackelement kann ein haptisches Feedback liefern, beispielsweise ein Vibrieren, eine Temperaturänderung und/oder einer Formänderung. Das Feedbackelement kann ein Vibrationselement umfassen, mit welchen sich Vibrationen oder ein Wackeln erzeugen lässt. Mit einem Vibrationselement können Auswirkungen von Fehlfunktionen oder Beschädigungen des Fahrzeugs auf das Fahrzeuginnere simuliert werden. Das Feedbackelement kann ein Temperaturelement zur Veränderung der Temperatur umfassen. Mit dem Temperaturelement kann ein Aufheizen und/oder Abkühlen erzielt werden. Das Feedbackelement kann ein Formveränderungselement zur Veränderung der Form, insbesondere der Oberflächenform, des Feedbackelements aufweisen. Das Formveränderungselement kann eine Formveränderung des Fahrzeuginneren simulieren, beispielsweise eine durch eine Sprengwirkung verursachte Einbuchtung der Fahrzeuginnenwand. Das Formveränderungselement kann insbesondere mit einem Fluid aufpumpbar ausgebildet sein. Mit einem aufpumpbaren Formveränderungselement können Materialien unterschiedlicher Härte simuliert werden, indem die Oberflächenspannung des Formveränderungselements durch stärkeres oder schwächeres Aufpumpen an die zu simulierende Materialhärte angepasst wird.

Das Feedbackelement kann ein Akustikelement, insbesondere einen Lautsprecher, umfassen. Das Akustikelement kann zu einer richtungsabhängigen Geräuschkulisse im Simulationsbereich beitragen, bei welcher ein Geräusch von dem in Richtung einer zu simulierenden Geräuschquelle liegenden Akustikelement erzeugt wird. Auf diese Weise lassen sich außerhalb des simulierten Fahrzeuginneren liegende Geräuschquellen simulieren, wie beispielsweise das Klappern eines hinter der Fahrzeuginnenwand liegenden Geräts.

In einer weiteren Ausgestaltung weist mindestens ein Wandmodul ein drucksensitives Element auf. Das drucksensitive Element kann als Eingabegerät während der Simulation dienen, insbesondere nach Art eines berührungsempfindlichen Bildschirms. Das drucksensitive Element kann ein Bestandteil des Wandelements und/oder des Oberflächenelements sein.

In einer Weiterbildung der Erfindung weist mindestens ein Wandmodul ein Lichtelement auf. Das Lichtelement kann ein visuelles Feedback während der Simulation geben und/oder die Oberflächentextur des Fahrzeuginneren darstellen. Das Lichtelement kann insbesondere einfarbige LEDs, RGB-LEDs oder ein Display umfassen. Das Lichtelement kann ein Bestandteil des Wandelements und/oder des Oberflächenelements sein.

Gemäß einer konstruktiven Ausgestaltung wird vorgeschlagen, dass die Wandmodule, insbesondere die Wandelemente, aus leichten, festen und/oder steifen Materialen hergestellt sind. Die Wandmodule können aus Koststoffe, Hartschaumstoffe, Faserverbundplatten oder Kombinationen hieraus gefertigt sein.

Es hat sich als vorteilhaft erwiesen, wenn mindestens ein Bediengerät zur Nachbildung eines Fahrzeugbediengeräts an den Wandelementen anordbar ist. Gleichwohl können auch mehrere Bediengeräte an den Wandmodulen angeordnet werden. Bei dem Bediengerät kann es sich beispielsweise um ein Lenkrad, ein oder mehrere Pedale, einen Knopf, einen Schalter, einen Hebel, eine Bedienkonsole oder ein Armaturenbrett handeln. Das Bediengerät kann mechanisch und/oder elektrisch funktionstüchtig sein, d. h. durch das Besatzungsmitglied während der Simulation betätigbar bzw. als Komponente in einen funktionierenden Schaltkreis eingebunden sein. Das Bediengerät kann dem Fahrzeugbediengerät optisch realitätsgetreu nachgebildet oder eine einfache Attrappe sein. Je nach zu simulierendem Fahrzeugtyp können unterschiedliche Bediengeräte vorgesehen sein, welche insbesondere aus einem Bediengerätesortiment ausgewählt werden können. Durch die Anordbarkeit an den Wandelementen kann das Fahrzeuginnere mit dem darin befindlichen Fahrzeugbediengerät realitätsgetreuer mit dem Simulationsraum simuliert werden.

Das Wandelement kann zur Anordnung eines Bediengeräts Befestigungselemente aufweisen, welche mit Befestigungselementen des Bediengeräts zur Befestigung zusammenwirken können. Insbesondere kann das Befestigungselement des Wandelements nach Art einer Nut, einer Steckaufnahme, eines Sacklochs, eines Innengewindes, einer Montageschiene oder eines Rastelements ausgebildet sein.

Bei einem Verfahren der eingangs genannten Art wird zur **Lösung** der vorstehend genannten Aufgabe vorgeschlagen, dass die Aktuatoren zur Positionsveränderung der Wandelemente über ein Rechnersystem angesteuert werden.

Über die Aktuatoren der Wandmodule wird die Position der Wandelemente verändert. Zur Nachbildung des Fahrzeuginneren unterschiedlicher Fahrzeugtypen wird der von den Wandelementen begrenzte Simulationsbereich des Simulationsraums verändert und an die Abmessungen des jeweiligen Fahrzeuginneren angepasst. Durch die Ansteuerung der Aktuatoren über das Rechnersystem erfolgt diese Anpassung auf schnelle und einfache Weise. Ein manueller Eingriff ist nicht erforderlich.

Die in Zusammenhang mit dem erfindungsgemäßen modularen Simulationsraum beschriebenen Merkmale können einzeln oder in Kombination auch bei dem Verfahren zur Anwendung kommen. Es ergeben sich die gleichen Vorteile, welche bereits beschrieben wurden.

In vorteilhafter Weise werden die Aktuatoren auf Basis eines Modells des nachzubildenden Fahrzeuginneren angesteuert. Im Rechnersystem kann das Modell des zu nachzubildenden Fahrzeuginneren ausgewählt werden. Das Rechnersystem kann im Anschluss vollautomatisch die einzelnen Aktuatoren ansteuern und bewegen und so die Position der Wandelemente gemäß der im Rechnersystem hinterlegten Abmessungen des Fahrzeuginneren verändern. Bei dem Modell kann es sich beispielsweise um ein CAD-Modell oder einen 3D-Scan des Fahrzeuginneren handeln. Die von den einzelnen Wandelementen einzunehmenden Positionen können für jedes Wandelement dem Modell zugeordnet hinterlegt werden oder dynamisch aus dem Modell bestimmt werden.

In diesem Zusammenhang hat es sich als vorteilhat erwiesen, wenn das Modell des Fahrzeuginneren in Segmente zerlegt wird, welche einer Auflösung der Wandelemente entspricht. Die Auflösung der Wandelemente ist der Abstand zwischen den benachbarten Wandelementen des Wandmoduls. Diese Auflösung kann, insbesondere bei einer matrixartigen Anordnung der Wandmodule und/oder Wandelemente, regelmäßig sein oder sich in verschiedenen Bereichen des Simulationsraums unterscheiden. Die Fahrzeuginnenwand des Modells des Fahrzeuginneren wird in ein Gitternetz dieser Auflösung zerlegt. Eine jede Netzmasche des Gitternetzes entspricht einem Segment, welches anschließend einem Wandelement zugeordnet wird. Diese Zerlegung und Zuweisung ermöglicht, dass jedes Wandelement individuell gemäß dem ihm zugewiesenen Segment des Modells positioniert werden kann. Mittels den entsprechend segmentgemäß positionierten Wandelementen kann der Simulationsbereich das Modell des Fahrzeuginneren sehr genau nachbilden.

Die Zerlegung des Modells in einzelne Segmente kann vorab erfolgen und im Rechnersystem hinterlegt werden oder dynamisch auf dem Rechnersystem erfolgen, d. h. nach der Auswahl des Modells auf dieses angewandt werden. Bei einer dynamischen Zerlegung können auch nicht zuvor prozessierte Modelle mit dem Simulationsraum nachgebildet werden. Zudem kann die Zerlegung an die aktuelle Auflösung des Simulationsraum angepasst werden, was insbesondere bei einem nachrüstbaren Simulationsraum eine Ausnutzung der maximalen Auflösung ermöglicht.

In vorteilhafter Weise werden die Aktuatoren hierarchisch angesteuert. Bei einer hierarchischen Ansteuerung der Aktuatoren können diese gemäß der Hierarchieebene, welcher sie angehören, angesteuert werden. Insbesondere bei über ein Bussystem seriell angesteuerten Aktuatoren, d. h. einer Ansteuerung jedes Aktuators nacheinander, können mittels einer hierarchischen Ansteuerung kürzere Reaktionszeiten zwischen einem Befehl zur Positionsveränderung aller Wandelemente und der Einnahme der veränderten Positionen durch alle Wandelemente des Simulationsraums erzielt werden. Aktuatoren höherer Hierarchieebenen werden hierbei vor Aktuatoren niederer Hierarchieebenen angesteuert.

In diesem Zusammenhang hat es sich als vorteilhaft erwiesen, wenn jeder Hierarchieebene ein eigener Adressraum zur Ansteuerung zugewiesen wird. Über einen eigenen Adressraum können die Aktuatoren einer Hierarchieebene auf besonders einfache Weise angesteuert werden. Ein mehrere Adressräume aufweisender Simulationsraum kann mehr Aktuatoren aufweisen, als maximal Adressen in einem beispielsweise 7 Bit- oder 10 Bit-Adressenraum vorhanden sind. Jeder Adressraum kann als Datenbus, wie ein serieller Inter-Integrated Circuit (auch I-2-C oder I-Quadrat-C genannt), ausgebildet sein. Ein Aktuator kann innerhalb des Adressraums seiner Hierarchieebene mit einer ID angesprochen werden, welche auch für Aktuatoren einer anderen Hierarchieebene, jedoch in dem anderen Adressraum verwendet wird. So kann ein Aktuator der niedersten Hierarchieebene, beispielsweise mit der ID 953 als "Ebene 3, Bus ID 953", angesprochen werden, während ein Aktuator der höchsten Hierarchieebene ebenfalls die ID 953 trägt, jedoch als "Ebene 1, Bus ID 953" im Adressraum der höchsten Hierarchieebene angesprochen wird.

In Weiterbildung der Erfindung werden die Positionen der Wandelemente dynamisch an die Simulation angepasst. Eine dynamische Anpassung ermöglicht eine Veränderung des Simulationsbereichs während der Laufzeit der Simulation. Der Simulationsbereich kann dynamisch vergrößert und/oder verkleinert werden. Krafteinwirkungen auf das Fahrzeug und/oder Verformungen des Fahrzeuginneren, beispielsweise plastische Verformungen aufgrund eines Beschusses oder einer Mineneinwirkung, können simuliert werden. Alternativ oder zusätzlich kann der Wechsel eines Fahrmodus simuliert werden. Beispielsweise der Wechsel von einer Fahrt unter Luke, bei welcher sich das Besatzungsmitglied gänzlich innerhalb des Fahrzeuginneren befindet, zu einer Fahrt über Luke, bei welcher sich zumindest der Kopf des Besatzungsmitglieds teilweise außerhalb des Fahrzeuginneren befindet. Hierzu können Teile des Simulationsbereichs vergrößert, indem Wandelemente in Richtung der Außenwand des Simulationsraums verschoben werden, und andere Teile des Simulationsraums verkleinert werden, indem Wandelemente von der Außenwand des Simulationsraums weg verschoben werden. Für das Besatzungsmitglied kann sich im Simulationsraum der Eindruck ergeben, dass es sich vom Fahrzeuginneren zumindest teilweise durch eine Luke nach Fahrzeugaußen begibt. In einem Simulationsraum hoher Auflösung, in welchem einzelne Wandelemente einen Schalter innerhalb des Fahrzeuginneren simulieren, können Schalterstellungen dynamisch simuliert werden.

Vorteilhafterweise formen die Wandelemente eine Sitzmöglichkeit während der Simulation. Ein Stuhl oder ein Fahrersitz kann auf einfache Weise durch die Wandelemente des Simulationsraums geformt werden. Auf den Einsatz einer gesonderten Sitzmöglichkeit kann auf kostensparende Weise verzichtet werden. Die durch die Wandelemente geformte Sitzmöglichkeit kann dynamisch verändert werden. Beispielsweise kann eine Fahrdynamik, wie ein Auf- und Abbewegen der Sitzmöglichkeit während einer Geländefahrt, simuliert werden.

Gemäß einer weiteren Ausgestaltung der Erfindung fahren die Wandelemente automatisch zum Ermöglichen des Betretens und/oder des Verlassens des Simulationsraums zurück. Ein Zurückfahren der Wandelemente, d. h. in ihrer Ausgangsstellung nahe der Außenwand des Simulationsraums, in welcher die Aktuatoren eingefahren sind, ermöglicht einen einfachen Zugang zum Simulationsraum. Bei einem automatischen Zurückfahren ist kein menschlicher Eingriff erforderlich, welcher nur auf das Auslösen des Zurückfahrens gerichtet ist. Das automatische Zurückfahren kann beispielsweise während des Öffnens einer Zugangstür zum Simulationsraum durch Sensoren, beispielsweise Berührungssensoren, Annäherungssensoren, Bewegungssensoren oder Sensoren im Türmechanismus, ausgelöst werden.

Weitere Einzelheiten und Vorteile eines erfindungsgemäßen modularen Simulationsraums sowie eines Verfahrens zum Betrieb des Simulationsraums sollen nachfolgend anhand der in den Figuren schematisch dargestellten Ausführungsbeispiele der Erfindung exemplarisch erläutert werden. Darin zeigt:
- Fig. 1: einen erfindungsgemäßen Simulationsraum,
- Fig. 2: einen allseitig durch Wandmodule begrenzten Simulationsbereich,
- Fig. 3a: einen Treppenstufeneffekt,
- Fig. 3b: das Neigen von Wandelementen,
- Fig. 4: ein Wandelement mit einem Marker,
- Fig. 5: ein Wandmodul mit verschachteltem Aufbau,
- Fig. 6: eine matrixartige Anordnung von Wandelementen,
- Fig. 7: ein Wandmodul mit einem Feedbackelement,
- Fig. 8: ein Wandmodul mit einem Formveränderungselement,
- Fig. 9: ein Wandmodul mit einem Temperaturelement und einem Lichtelement,
- Fig. 10: ein Wandmodul mit einem Oberflächenelement,
- Fig. 11: ein Wandmodul mit einem drucksensitiven Element,
- Fig. 12: ein Wandmodul mit einem Bediengerät,
- Fig. 13a-c: die Zerlegung eines Fahrzeuginneren in einzelne Segmente, und
- Fig. 14a, b: eine dynamische Anpassung der Wandelemente während einer Simulation.

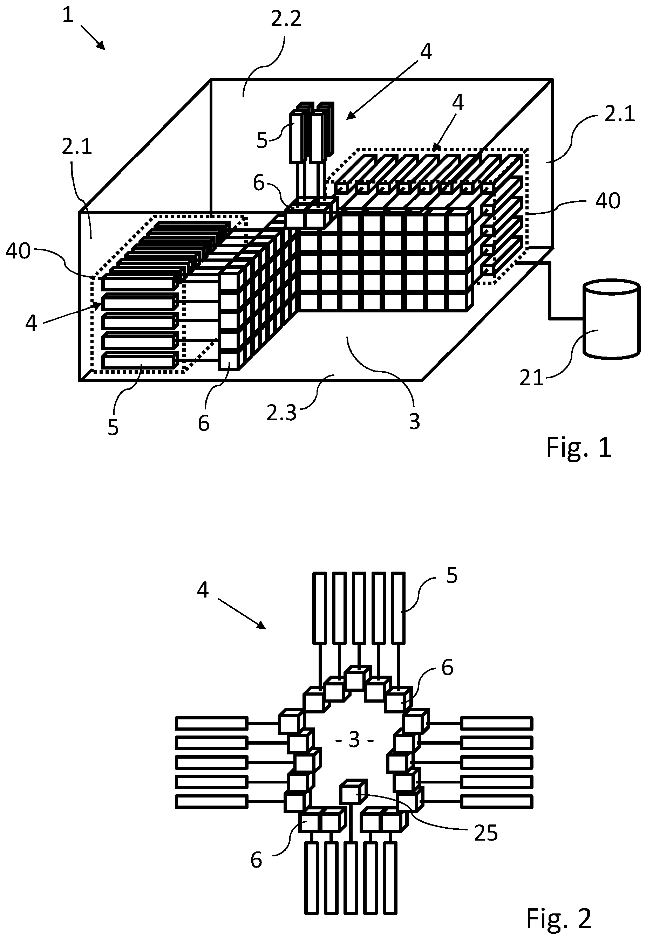

In Fig. 1 ist ein modularer Simulationsraum 1 gezeigt, mit welchem das Fahrzeuginnere 100 eines insbesondere militärischen Fahrzeugs, beispielsweise zum Training eines Besatzungsmitglieds, simuliert werden kann. Um das Fahrzeuginnere 100 zur Simulation nachzubilden, sind in dem Simulationsraum 1 mehrere Wandmodule 4 angeordnet. Jedes Wandmodul 4 umfasst einen Aktuator 5, mit welchem ein zum Wandmodul 4 gehöriges Wandelement 6 in seiner Position verändert werden kann.

Die Aktuatoren 5 sind als Teleskopelemente ausgebildet, welche ein- und ausgefahren werden können, um so die Position des Wandelements 6 im Simulationsraum 1 zu verändern. Die Aktuatoren 5 sind an zwei Seitenwänden 2.1 sowie der Decke 2.2 des Simulationsraums 1 angeordnet. Aus Gründen der Übersichtlichkeit sind von den an der Decke 2.2 des Simulationsraums 1 angeordneten Wandmodulen 4 lediglich vier Wandmodule 4 exemplarisch dargestellt, gleichwohl können diese die gesamte Decke 2.2 bedecken. Auch die an den Seitenwänden 2.1 des Simulationsraums 1 angeordnete Wandmodule 4 sind lediglich schematisch angedeutet.

Die an den Seitenwänden 2.1 angeordneten Aktuatoren 5 bilden jeweils einen Aktuatorenblock 40, in welchem die einzelnen Aktuatoren 5 in regelmäßigen Abständen zueinander angeordnet sind. In diesen Aktuatorenblöcken 40 sind lediglich die äußeren Aktuatoren 5 dargestellt. Bei den Aktuatorenblöcken 40 kann es sich um eine bauliche Einheit handeln, welche eine einfache Montage der Aktuatoren 5 und somit der Wandmodule 4 im Simulationsraum 1 ermöglicht, oder um ein sich rein durch die Anordnung der einzelnen Aktuatoren 5 im Simulationsraum 1 ergebene Struktur. Wenngleich die dargestellten Aktuatorenblöcke 40 einen Teilbereich der jeweiligen Seitenwände 2.1 bedecken und die Wandmodule 4 nicht über die gesamte Decke 2.2 des Simulationsraums 1 verteilt sind, so können die Wände 2, d. h. sowohl die Seitenwände 2.1, die Decke 2.2 wie auch der Fußboden 2.3 des Simulationsraums 1, auch vollständig mit Wandmodulen 4 bedeckt werden. Zudem ist es möglich, dass, anders als in Fig. 1 dargestellt, nicht lediglich drei von insgesamt sechs Wänden 2 des Simulationsraums 1 mit Wandmodulen bedeckt werden, sondern vielmehr können sämtliche oder auch weniger der Wände 2 des Simulationsraums 1 mit Wandmodulen 4 versehen werden.

Wie in Fig. 1 zu erkennen ist, sind die Wandmodule 4 und somit auch die Wandelemente 6 matrixartig nach Art eines Schachbretts angeordnet. Die Wandelemente 6 der an den Wänden 2 des Simulationsraums 1 angeordneten Wandmodule 4 begrenzen einen Simulationsbereich 3 innerhalb des Simulationsraums 1. Die Wandelemente 6 bilden auf diese Weise eine Innenwand des Simulationsraums 1. In diesem Simulationsbereich 3 befindet sich das Besatzungsmitglied während der Simulation. Im Rahmen der Simulationsdurchführung tritt der Simulationsraum 3 daher an die Stelle des realen Fahrzeuginneren 100.

Durch die Positionsveränderbarkeit der einzelnen Wandelemente 6 kann die Form dieses Simulationsbereichs 3 an das Fahrzeuginnere 100 eines zu simulierenden Fahrzeugs angepasst werden. Hierzu kann ein Wandelement 6 durch ein Einfahren des Aktuators 5 des jeweiligen Wandmoduls 4 weiter von der jeweiligen Wand 2 des Simulationsraums 1, an welcher der Aktuator 5 angeordnet ist, beabstandet werden und so den Simulationsbereich 3 einschränken. Durch ein Ausfahren des Aktuators 5 in Richtung der Wand 2, an welcher der Aktuator 5 angeordnet ist, kann der Simulationsbereich 3 vergrößert werden.

Zur Steuerung der einzelnen Aktuatoren 5 und somit zur Positionsveränderung der Wandelemente 6 weist der Simulationsraum 1 ein Rechnersystem 21 auf, mit welchem die einzelnen Aktuatoren 5 individuell oder gruppenweise angesteuert werden können. Dieses Rechnersystem 21 kann innerhalb des Simulationsraums 1 oder außerhalb des Simulationsraums 1 angeordnet sein. Neben der Position der einzelnen Wandelemente 6 kann das Rechnersystem 21 zudem auch weitere Parameter der Simulation steuern, wie beispielsweise ein Feedback, die Lichtverhältnisse im Simulationsraum 1, dem Besatzungsmitglied angezeigte Darstellungen einer fahrzeugaußenseitigen Umgebung oder eine Geräuschkulisse. Über das Rechnersystem 21 können die Wandelemente 6 zudem automatisch in eine Ausgangsstellung zurückgefahren werden, in welcher die Aktuatoren 5 maximal weit eingefahren sind, so dass die Wandmodule 4 das Innere des Simulationsraums 1 minimal begrenzen. In dieser zurückgefahrenen Stellung kann ein Zugang zu einer hier nicht dargestellten Zugangsöffnung des Simulationsraums 1, wie beispielsweise eine Tür, freigegeben werden, um so ein möglichst einfaches Betreten und/oder Verlassen des Simulationsraums 1 zu ermöglichen.

Fig. 2 zeigt einen Schnitt entlang einer vertikal verlaufenden Schnittebene durch einen Simulationsraum 1. In diesem Simulationsraum 1 wurden die Wandmodule 4 unterschiedlich betätigt, so dass die Wandelemente 6 einen Simulationsbereich 3 von komplexerer Geometrie begrenzen. Anders als bei dem in Fig. 1 dargestellten Simulationsraum 1 wird der Simulationsbereich 3 nicht lediglich entlang dreier seiner Seiten durch die Wandelemente 6 begrenzt, sondern vielmehr von sämtlichen Seiten, d. h. sowohl nach vorne als auch nach hinten, nach links und nach rechts sowie nach oben und nach unten. Im hier dargestellten Schnitt durch den Simulationsbereich 3 sind lediglich die Begrenzungen durch die Wandelemente 6 zu den Seiten sowie nach oben und nach unten zu erkennen.

Neben den an der Begrenzung des Simulationsbereichs 3 beteiligten Wandmodulen 4 können an den Wänden 2 des Simulationsraums 1 weitere, nicht an der Begrenzung des Simulationsbereichs 3 beteiligte Wandmodule 4 angeordnet sein. Diese Wandmodule 4 können so in Reserve gehalten werden und zur Begrenzung eines anders geformten Simulationsbereichs 3 eingesetzt werden.

Das mittlere der fußbodenseitigen Wandelemente 6 ist innerhalb des Simulationsbereiches 3 positioniert worden. Dieses Wandelement 6 bildet eine Sitzmöglichkeit 25 innerhalb des Simulationsbereichs 3, beispielsweise für ein an der Simulation teilnehmendes Besatzungsmitglied eines realen Fahrzeugs. Die Bereitstellung einer Sitzmöglichkeit 25 mittels eines oder mehrerer Wandmodule 4 gestattet es, eine auf die Sitzmöglichkeit 25 wirkende Fahrdynamik zu simulieren. Zu diesem Zwecke wird das die Sitzmöglichkeit 25 darstellende Wandelement 6 durch Ein- und Ausfahren des Aktuators 5 entsprechend der simulierten Fahrbewegung dynamisch in seiner Position verändert, um auf diese Weise ein Auf- und Abbewegen eines Fahrzeugsitzes zu simulieren.

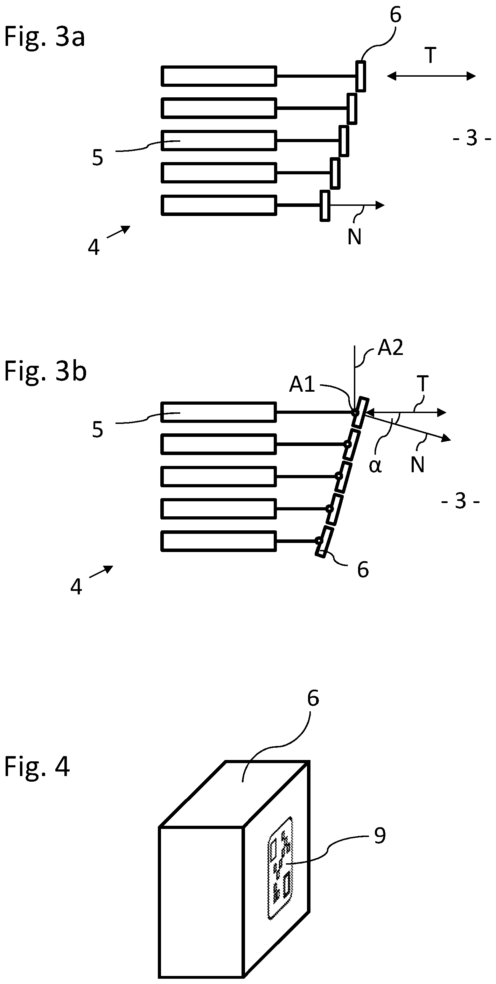

In Fig. 3a ist eine Reihe von Wandmodulen 4 dargestellt, deren Aktuatoren 5 unterschiedlich weit ausgefahren sind. Die einzelnen Wandelemente 6 sind daher entlang einer Diagonalen angeordnet. Die Oberflächennormalen N der Wandelemente 6 verlaufen parallel zur Translationsachse T der einzelnen Wandmodule 4. Entlang dieser Translationsachse T können die Wandelemente 6 mittels der Aktuatoren 5 linear positioniert werde. Die Wandelemente 6 sind bei den gezeigten Wandmodulen 4 derart starr mit den Aktuatoren 5 verbunden, dass sich die Oberflächennormale N nicht verändern lässt. Diese Ausführungsform fällt nicht unter den Wortlaut der Ansprüche, wird aber als das Verständnis der Erfindung erleichternd angesehen.

Auf diese Weise ergibt sich eine Abstufung nach Art eines Treppenstufeneffekts bei der Nachbildung einer Diagonalen, was auch als haptisches Aliasing bezeichnet wird. Bei der Nachbildung von abgeschrägten Flächen, wie beispielsweise der Diagonalen im dargestellten Beispiel, ergibt sich auf diese Weise eine wenig realitätsgetreue Abstufung während der Simulation.

Im Gegensatz zu den in Fig. 3a dargestellten Wandmodulen 4 sind die in Fig. 3b gezeigten Wandmodule 4 erfindungsgemäß neigbar ausgebildet. Bei diesen neigbaren Wandmodulen 4 sind die Wandelemente 6 lageveränderlich an den Aktuatoren 5 angeordnet. Im dargestellten Ausführungsbeispiel können die Wandelemente 6 um zwei im Wesentlichen orthogonal zueinander verlaufende Achsen A1, A2 geneigt werden. Die Achse A1 erstreckt sich in Fig. 3b aus der Bildebene hinaus. Durch ein Neigen um eine oder beide dieser Achsen A1, A2 kann die Oberflächennormale N eines jeden Wandmoduls 6 individuell ausgerichtet werden. Im hier dargestellten Beispiel sind sämtliche Wandelemente 6 um den gleichen Winkel α um ihre jeweilige Achse A1 nach unten geneigt. Auf diese Weise ergibt sich über die Wandelemente 6 hinweg eine diagonal verlaufende, im Wesentlichen ebene Fläche. Bei der Begrenzung des Simulationsbereichs 3 stellt sich durch die neigbaren Wandelemente 6 kein Treppenstufeneffekt mehr ein, so dass eine noch realitätsgetreuere Simulation eines Fahrzeuginneren 100, insbesondere mit abgeschrägten Flächen, durch die neigbaren Wandmodule 4 ermöglicht wird. Die neigbaren Wandelemente 6 sind in der Ausführungsform nicht nur in ihrer Position im Simulationsraum 1, sondern auch in ihrer Lage, d. h. ihrer Ausrichtung, im Simulationsraum 1 veränderbar.

Fig. 4 zeigt eine Ausführungsform eines Wandelements 6, welches einen zweidimensionalen Marker 9 nach Art eines QR-Codes aufweist. Mittels im Simulationsraum 1 angeordneten Sensoren kann die Position dieses Markers 9 bestimmt werden. Über die Position des Markers 9 kann auf die Position des Wandelements 6 zurückgeschlossen werden. Diese Positionsinformation kann an das Rechnersystem 21 weitergeleitet werden. Über einen Vergleich der bekannten Form des Markers 9 mit der von dem Sensor erfassten Form des Markers 9 kann zudem auf die Lage des Wandelelements 6 im Simulationsraum 1 zurückgeschlossen werden. Das Rechnersystem 21 kann mit diesen Positions- und/oder Lageinformationen die Position und/oder Lage der Wandelemente 6 im Simulationsraum 1 zur Anpassung an einen Vorgabewert verändern. Auf diese Weise lässt sich eine Regelschleife bei der Positionierung und/oder Ausrichtung der Wandelemente 6 verwirklichen.

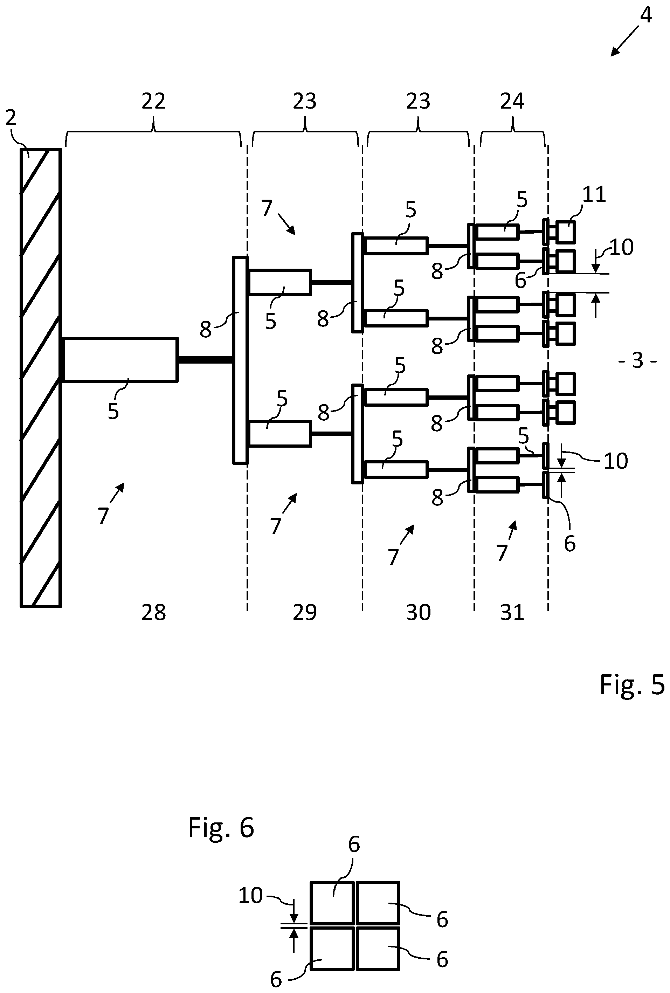

Das Wandmodul 4 in Fig. 5 ist im Gegensatz zu den bislang dargestellten Wandmodulen 4 verschachtelt aufgebaut. Es weist mehrere Teilmodule 7 auf, welche jeweils einen Aktuator 5 sowie ein Abschlusselement 8 umfassen. Das verschachtelte Wandmodul 4 weist mehrere Hierarchieebenen 22, 23, 24 auf, welche jeweils mindestens ein Teilmodul 7 beinhalten. Die höchste Hierarchieebene 22 stellt das wandseitige Ende des Wandmoduls 4 dar, wobei der Aktuator 5 dieser höchsten Hierarchieebene 22 an der Wand 2 des Simulationsraums 1 angeordnet ist. In Richtung des Simulationsbereichs 3 schließt sich an das Teilmodul 7 der höchsten Hierarchieebene 22 die nächstniedere Hierarchieebene 23 an. Jede der niederen Hierarchieebenen 23, 24 weist jeweils mindestens ein weiteres Teilmodul 7 auf. In der einfachsten, hier nicht dargestellten Ausführungsform eines derartigen hierarchischen Wandmoduls 4 ergibt sich im Wesentlichen eine Reihenschaltung einzelner Teilmodule 7. In dem in Fig. 5 dargestellten Ausführungsbeispiel eines verschachtelten Wandmoduls 4 sind jedoch an jedem mit dem Aktuator 5 einer jeden Hierarchieebene 22, 23 verbundenen Abschlusselement 8 vier Teilmodule 7 der jeweils folgenden, niederen Hierarchieebene 23, 24 angeordnet.

Die Anordnung der Teilmodule 7 einer Hierarchieebene 23, 24 erfolgt im dargestellten Ausführungsbeispiel nach Art einer 2x2-Matrix an dem Abschlusselement 8 der nächsthöheren Hierarchieebene 22, 23. In Fig. 5 sind daher jeweils nur zwei Teilmodule 7 pro Abschlusselement 8 der nächsthöheren Hierarchieebene 22, 23 gezeigt, da in der Bildebene zwei weitere Teilmodule 7 hinter diesen liegen. Durch diesen verschachtelten Aufbau nach Art eines Quadtrees mit vier Teilmodulen 7 pro Teilmodul 7 einer höheren Hierarchieebene 22, 23 ergibt sich ein fein gefächerter Aufbau des Wandmoduls 4.

Dargestellt sind hier insgesamt vier Hierarchieebenen, wobei sich einer höchsten Hierarchieebene 22 nacheinander zwei Zwischenhierarchieebenen 23 und eine niederste Hierarchieebene 24 anschließt. Die Abschlusselemente 8 der niedersten Hierarchieebene 24 sind als Wandelemente 6 ausgebildet, welche den Simulationsbereich 3 begrenzen. Zwischen diesen Wandelementen 6 besteht ein lediglich geringer Spalt 10, welcher insbesondere im Millimeterbereich liegt. Die unterschiedlichen Abstände zwischen den Wandelementen 6 des in Fig. 5 dargestellten verschachtelten Aufbaus dienen der besseren Darstellung der hierarchischen Struktur und sind im realen Wandmodul 4 so nicht vorgesehen, d. h. die Spalte 10 weisen die geleichen Spaltmaße auf. Gleichwohl können bei einem Wandmodul 4 auch unterschiedliche Spaltmaße vorgesehen sein.

Der hierarchische Aufbau des Wandelements 4 ermöglicht es, durch Betätigung eines einzelnen Aktuators 5 der höchsten Hierarchieebene 22 oder einer Zwischenhierarchieebene 23 mehrere Wandelemente 6 gleichzeitig in ihrer Position zu verändern. Ohne dass mehrere Aktuatoren 5 einer niederen Hierarchieebene 23, 24 angesteuert werden müssen, kann durch eine derartige hierarchische Ansteuerung eine schnelle Positionierung der Wandelemente 6 ermöglicht werden. Denn zur Positionierung der Wandelemente 6 kann es ausreichen, lediglich einen Aktuator 5 oder eine im Vergleich zur Positionsveränderung durch jeden Aktuator 5 der niedersten Hierarchieebene 24 geringe Anzahl von Aktuatoren 5 zu betätigen. Das Rechnersystem 21 steuert die Aktuatoren 5 des Wandmoduls 4 hierzu hierarchisch an. Hierbei werden zunächst die Aktuatoren 5 der höchsten Hierarchieebene 22 angesteuert, hieran anschließend die Aktuatoren 5 der Zwischenhierarchieebenen 23 und abschließend die Aktuatoren 5 der niedersten Hierarchieebene 24. Auf die Betätigung einer Gruppe von Aktuatoren 5 einer niederen Hierarchieebene 23, 24 kann zudem verzichtet werden, wenn bereits durch die Betätigung eines Aktuators 5 einer höheren Hierarchieebene 22, 23 die einzustellende Position der Wandelemente 6 erreicht wurde.

Da das Rechnersystem 21 mehrere Wandmodule 4 ansteuert und die Anzahl der einzelnen Aktuatoren 5 die einzelnen Adressen innerhalb eines typischerweise verwendeten 7-Bit- oder 10-Bit-Adressraums übersteigt, kann jeder Hierarchieebene 22, 23, 24 ein eigener Adressraum 28, 29, 30, 31 zugewiesen werden. Die Größe dieser Adressräume 28, 29, 30, 31 kann hierbei gleich groß sein, so dass eine Adresse oder ID in mehreren Adressräumen verwendet werden kann. So werden beispielsweise sämtlichen Aktuatoren 5 der höchsten Hierarchieebene 22 aller im Simulationsraum 1 angeordneter Wandmodule 4 jeweils eine Adresse aus einem ersten Adressraum 28 zugewiesen. Ebenso erhält jeder Aktuator 5 der nächstniederen Zwischenhierarchieebene 23 eine ID in einem Adressraum 29, welchen sich die Aktuatoren 5 dieser Zwischenhierarchieebene 23 sämtlicher Wandmodule 4 im Simulationsraum 1 teilen. Ebenso erhalten alle Aktuatoren 5 der sich hieran anschließenden nächstniederen Zwischenhierarchieebene 23 aller Wandmodule 4 eine Adresse aus einem gemeinsamen Adressraum 30 und auch sämtliche Aktuatoren 5 der niedersten Hierarchieebene 24 eine Adresse in einem Adressraum 31. Der Aktuator 5 der in Fig. 5 dargestellten höchsten Hierarchieebene 22 kann durch das Rechnersystem 21 so beispielsweise als "Ebene 1, Bus-ID 953" angesprochen werden, wobei "Ebene 1" die Bezeichnung für den Adressraum 28 ist und "Bus-ID 953" die Adresse des individuellen Aktuators 5 in diesem Adressraum 28 ist. Zugleich kann auch einer der in Fig. 5 dargestellten Aktuatoren 5 der niederen der beiden Zwischenhierarchieebenen 23 ebenfalls die Adresse "Bus-ID 953" tragen, jedoch im Adressraum 30, so dass dieser Aktuator 5 vom Rechnersystem 21 als "Ebene 3, Bus-ID 953" angesprochen werden kann. Das Rechnersystem 21 kann mittels der Adressräume 28, 29, 30, 31 die einzelnen Hierarchieebenen 22, 23, 24 sämtliche Wandmodule 4 innerhalb des Simulationsraums 1 hierarchieebenenweise ansprechen.

Da die Aktuatoren 5 der höheren Hierarchieebenen 22, 23 aufgrund des verschachtelten Aufbaus ein höheres Gewicht als die Aktuatoren 5 der niederen Hierarchieebenen 23, 24 tragen, sind die Aktuatoren 5, insbesondere der Aktuator 5 der höchsten Hierarchieebene 22, größer als die Aktuatoren 5 der niederen Hierarchieebenen 23, 24 ausgebildet. Ein größerer Aktuator 5 kann insbesondere eine höhere Tragkraft und/oder eine höhere Leistungsstärke als die weiter simulationsbereichsseitig gelegenen Aktuatoren 5 aufweisen. Durch den größeren Aktuator 5 wird das Wandmodul 4 stabiler ausgebildet. Wie in Fig. 5 dargestellt, sind die Aktuatoren 5 der höheren Hierarchieebenen 22, 23 länger als die Aktuatoren 5 der niederen Hierarchieebenen 23, 24, so dass auch der Aktionsweg, d. h. der maximale Unterschied zwischen einem gänzlich eingefahrenen und einem ausgefahrenen Zustand des Aktuators 5, für die Aktuatoren 5 der äußeren Hierarchieebenen 22, 23 größer ist als bei den Aktuatoren 5 der inneren Hierarchieebenen 23, 24.

Der in Fig. 5 dargestellte verschachtelte Aufbau des Wandmoduls 4 gestattet zudem eine einfache Nachrüstung des Wandmoduls 4, indem an die als Wandelemente 6 ausgebildeten Abschlusselemente 8 der Teilmodule 7 der niedersten Hierarchieebene 24 weitere Teilmodule 7 mit als Wandelemente 6 ausgebildeten Abschlusselementen 8 angeordnet werden. Auf diese Weise wird die niederste Hierarchieebene 24 zu einer neuen Zwischenhierarchieebene 23 und die neu hinzugefügte Hierarchieebene zur neuen niedersten Hierarchieebene 24. Da die Fläche der Abschlusselemente 8 von Hierarchieebene zu Hierarchieebene abnimmt, erhöht sich mit jeder weiteren Hierarchieebene die Auflösung des Wandmoduls 4. Bei der Auflösung des Wandmoduls 4 handelt es sich um den Abstand zwischen benachbarten Wandelemente 6, welche zur Begrenzung des Simulationsbereichs 3 genutzt werden. Umso kleiner die Wandelemente 6 werden, umso kleiner wird auch der Abstand zwischen den Wandelementen 6, gemessen vom Mittelpunkt des Wandelements 6 zum Mittelpunkt des benachbarten Wandelements 6. Durch eine Steigerung der Anzahl der Hierarchieebenen 22, 23, 24 wird auf diese Weise eine Vergrößerung der Auflösung des Wandmoduls 4 erzielt.

An einigen der Wandelemente 6 der Teilmodule 7 der niedersten Hierarchieebene 24 sind Oberflächenelemente 11 angeordnet, welche zu einer realitätsgetreueren Nachbildung des Fahrzeugsinnenraums dienen. Diese Oberflächenelemente 11 sind im dargestellten Ausführungsbeispiel als Anbauteile ausgebildet, welche an den Wandelementen 6 angeordnet werden. Gleichwohl können die Oberflächenelemente 11 aber auch als integraler Bestandteil des jeweiligen Wandelements 6 ausgebildet sein. Die Oberflächenelemente 11 bilden die Oberflächenstruktur und Oberflächentextur des Fahrzeuginneren 100 nach. Das Oberflächenelement 11 kann auf diese Weise einen Oberflächenkonturverlauf aufweisen, welcher sich mit den Wandelementen 6 des Wandmoduls 4 nicht nachbilden lässt. Auf diese Weise kann eine Nachbildung des Fahrzeuginneren 100 mit einer höheren Auflösung als der durch das Wandmodul 4 bereitgestellten Auflösung erzielt werden. Für jedes unterschiedliche nachzubildende Fahrzeuginnere 100 ist es erforderlich, eine neue Auswahl unter zur Verfügung stehenden Oberflächenelementen 11 zu treffen und/oder neue Oberflächenelemente 11 anzufertigen.

In Fig. 6 ist eine simulationsbereichsseitige Ansicht auf Teilmodule 7 der niedersten Hierarchieebene 24 dargestellt, welche gemeinsam an einem Abschlusselement 8 der nächsthöheren Zwischenhierarchieebene 23 angeordnet sind. Wie zu erkennen ist, bilden die Wandelemente 6 dieser Teilmodule 7 die simulationsbereichsseitige Begrenzung des Simulationsbereichs 3 nach Art einer Innenwand. Zu erkennen ist die Anordnung der Wandelemente 6 nach Art einer 2x2-Matrix mit sich zwischen den einzelnen Wandelementen 6 befindlichen Spalten 10.

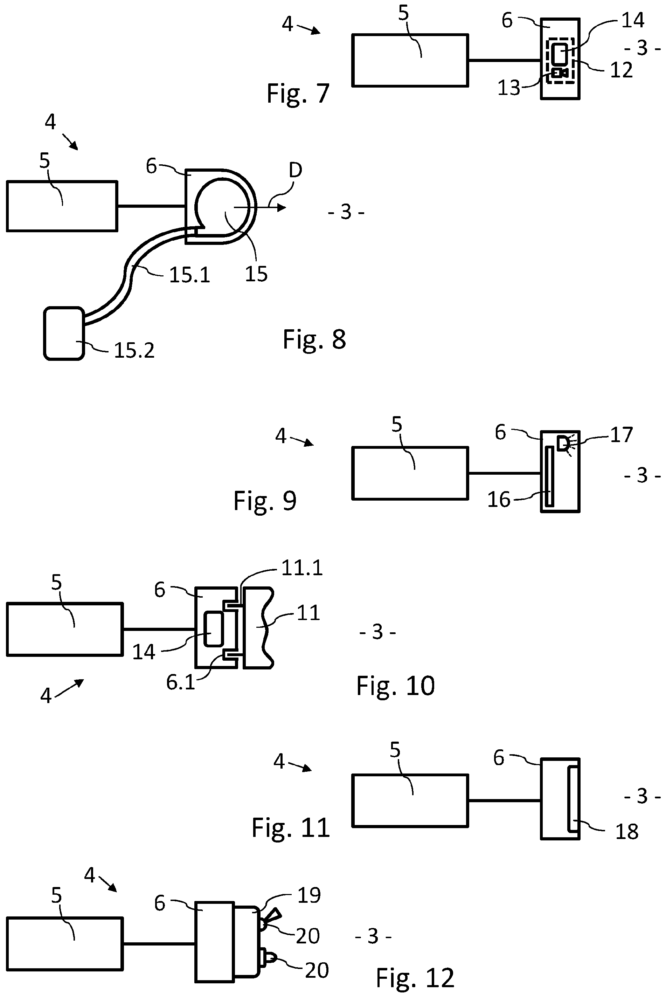

In Fig. 7 ist ein Ausführungsbeispiel eines Wandmoduls 4 dargestellt, welches auch beispielsweise als Teilmodul 7 der niedersten Hierarchieebene 24 eines verschachtelt aufgebauten Wandmoduls 4 genutzt werden kann. Das Wandelement 6 des Wandmoduls 4 umfasst ein Feedbackelement 12, mit welchem dem sich im Simulationsbereich 3 befindlichen Besatzungsmitglied ein aktives Feedback während der Simulation gegeben werden kann. Das Feedbackelement 12 umfasst im hier dargestellten Ausführungsbeispiel ein Akustikelement 13 sowie ein Vibrationselement 14. Das Akustikelement 13 kann Töne emittieren, um beispielsweise eine richtungsabhängige Geräuschkulisse im Simulationsbereich 3 zu erzeugen. Mit dem Vibrationselement 14 kann das gesamte Wandelement 6 in Schwingung versetzt werden. Auf diese Weise lassen sich Schwingungen in den Fahrzeuginnenraum 100 simulieren, beispielsweise durch eine Fehlfunktion verursachte Vibrationen oder ein Klappern. Anders als bei dem Akustikelement 13 zielt die Verwendung des Vibrationselements 14 jedoch nicht auf die Emittierung von Schallwellen in den Simulationsbereich 3 ab.

Das Feedbackelement 12 kann einen integralen Bestandteil des Wandelements 6 darstellen, in diesem austauschbar angeordnet sein oder von außen mit diesem verbunden werden. Das Akustikelement 13 sowie das Vibrationselement 14 können hierbei auch jeweils für sich als Feedbackelement 12 in oder an einem Wandelement 6 angeordnet werden.

In Fig. 8 ist ein Wandmodul 4 mit einem ein Formveränderungselement 15 umfassenden Wandelement 6 dargestellt. Das Formveränderungselement 15 kann seine Form und so die Oberfläche des Wandelements 6 verändern. Hierzu wird dem Formveränderungselement 15 über einen Schlauch 15.1 ein Fluid, wobei es sich um ein Gas oder eine Flüssigkeit handeln kann, insbesondere Druckluft oder ein Hydrauliköl, aus einem Reservoir 15.2 zugeführt. Bei dem Reservoir 15.2 kann es sich beispielsweise um einen Kompressor, einen Verdichter oder einen Druck stehenden Behälter handeln, von welchem die Flüssigkeit über den Schlauch 15.1 in das als Hohlkörper ausgebildete Formveränderungselement 15 gefördert werden kann. Durch das in das Formveränderungselement 15 einströmende Fluid wird das Formveränderungselement 15 aufgepumpt. Durch dieses Aufpumpen kann die Oberflächenspannung des Formveränderungselements 15 variiert werden um unterschiedlich harte oder weiche Oberflächen zu simulieren. Das Formveränderungselement 15 dehnt sich durch das einströmende Fluid entlang der Ausdehnungsrichtung D aus. Die Oberflächenform des Wandelements 6 wird hierbei verändert. Durch diese Veränderung der Oberflächenform kann eine Formveränderung des Fahrzeuginneren 100 simuliert werden.

Die veränderte Form des Formveränderungselements 15 kann durch ein gegenläufiges Ausströmen des Fluids aus dem Formveränderungselement 15 rückgängig gemacht werden. Hierzu kann das Fluid in das Reservoir 15.2 zurückgeführt oder in ein hier nicht dargestelltes weiteres Reservoir oder den Simulationsraum 1 abgeführt werden. Zu diesem Zweck ist das Formveränderungselement 15 aus einem Material großer Spannkraft gefertigt, welches selbstständig in den nicht aufgepumpten Zustand zurückstrebt. Eine Abführung des Fluids von dem Formveränderungselement 15 in den Simulationsraum 1 ist besonders bei der Verwendung von Druckluft als Fluid vorteilhaft. Das Reservoir 15.2 kann alternativ auch in dem Wandelement 6 vorgesehen sein, wodurch insbesondere auf den Schlauch 15.1 zur Verbindung des Reservoirs 15.2 mit dem Formveränderungselement 15 verzichtet werden kann.

Fig. 9 zeigt ein Wandmodul 4, dessen Wandelement 6 ein Temperaturelement 16 sowie ein Lichtelement 17 aufweist. Mit dem Temperaturelement 16 als aktives Feedbackelement 12 kann die Temperatur des Wandelements 6 verändert werden. Das Temperaturelement 16 ist hierbei als Heiz- und Kühlelement ausgebildet, so dass dieses sowohl eine Temperaturerhöhung als auch eine Temperaturreduzierung des Wandelements 6 bewirken kann. Mit dem Temperaturelement 16 lassen sich ortsaufgelöst Temperaturveränderungen in dem Fahrzeuginnenraum 100 simulieren, indem einzelne den Simulationsbereich 3 begrenzende Wandelemente 6 oder Gruppen von Wandelementen 6 gezielt erwärmt oder gekühlt werden. Das Lichtelement 17 kann während der Simulation ein visuelles Feedback geben, indem es aufleuchtet. Hierzu ist das Lichtelement 17 als RGB-LED mit einstellbarem Farbwert ausgebildet. Abhängig von dem zu erzielenden visuellen Feedback kann der Farbwert des Lichtelements 17 entsprechend gewählt und/oder vom Rechnersystem 21 eingestellt werden. Damit das Besatzungsmitglied während der Simulation das von dem Lichtelement 17 emittierte Licht wahrnehmen kann, ist die dem Simulationsbereich 3 zugewandte Seite des Wandelements 6 zumindest bereichsweise transparent und/oder transluzent ausgebildet.

Ein Wandmodul 4, an welchem ein Oberflächenelement 11 angeordnet ist, ähnlich den Teilmodulen 7 in der niedersten Hierarchieebene 24 in Fig. 5, ist in Fig. 10 dargestellt. Das Oberflächenelement 11 weist Befestigungselemente 11.1 auf, welche nach Art von Steckstiften in korrespondierende Befestigungselemente 6.1 des Wandelements 6, welche nach Art von Steckaufnahmen ausgebildet sind, eingesteckt werden. Die zusammenwirkenden Befestigungselemente 6.1, 11.1 ermöglichen einen einfachen Austausch des Oberflächenelements 11 zur Anpassung an unterschiedlich zu simulierende Fahrzeuginnere 100. Wie in Fig. 10 zu erkennen ist, weist das Oberflächenelement 11 eine simulationsraumseitige Oberflächenstruktur auf, welche eine Auflösung aufweist, die unterhalb der Größe des Wandelements 6 liegt.

Das Wandelement 6 ist zusätzlich mit einem Vibrationselement 14 als Feedbackelement 12 ausgestattet. Die durch das Vibrationselement 14 erzeugbaren Vibrationen werden von dem Wandelement 6 über die Befestigungselemente 6.1, 11.1 auf das Oberflächenelement 11 übertragen. Die durch das Vibrationselement 14 verursachten Vibrationen können auf diese Weise auch an der simulationsbereichsseitigen Oberfläche des Oberflächenelements 11 durch das Besatzungsmitglied wahrgenommen werden.

Zusätzlich kann das Oberflächenelement 11 auch noch weitere Feedbackelemente 12 aufweisen, welche die Feedbackelemente 12 des Wandelements 6 während der Simulation unterstützen und/oder ergänzen können. Beispielsweise kann das Oberflächenelement 11 Feedbackelemente 12 von einem Typ aufweisen, über welchen das verwendetn Wandelement 6 nicht verfügt. Das Oberflächenelement 11 kann über die Befestigungselemente 6.1, 11.1 auch mit einem Wandelement 6 verbunden werden, welches über keinerlei Feedbackelemente 12 verfügt.

Die Ausführungsformen des in Fig. 11 dargestellten Wandmoduls 4 weist ein drucksensitives Element 18 in dem Wandelement 6 auf. Dieses drucksensitive Element 18 kann nach Art eines Touch-Bildschirms ausgebildet sein. Es bildet einen Teil der simulationsbereichsseitigen Oberfläche des Wandelements 6. Eine Bedienoberfläche im Fahrzeuginneren 100 kann mit einem derartigen Wandmodul 4 auf einfache Weise im Simulationsraum 1 nachgebildet werden. Das drucksensitive Element 18 tritt hierzu an die Stelle eines entsprechenden, im realen Fahrzeuginneren 100 vorhandenen Elements, wie beispielsweise eines Displays.

Das in Fig. 12 dargestellte Wandmodul 4 weist ein Bediengerät 19 auf, welches an dem Wandelement 6 angeordnet ist. Eine Anordnung dieses Bediengeräts 19 an dem Wandelement 6 kann auf ähnliche Weise erfolgen, wie dies für das Oberflächenelement 11 in Fig. 10 gezeigt ist. Ebenso kann das Bediengerät einen integralen Bestandteil des Wandelements 6 darstellen, d. h. es ist nicht von dem Wandelement 6 trennbar.

Das in Fig. 12 dargestellte Bediengerät 19 weist zwei Bedienelemente 20 auf, welche durch das Besatzungsmitglied betätigt werden können. Das obere Bedienelement 20 ist als Kippschalter und das untere Bedienelement 20 als Drehregler ausgestaltet. Die Bedienelemente 20 können hierbei als reine Dummys ausgebildet sein, welche zwar von dem Besatzungsmitglied betätigt werden können, die jedoch keine weitere Funktion auslösen. Zur realitätsgetreueren Simulation des Fahrzeuginneren 100 sind die Bedienelemente 20 sowie das Bediengerät 19 jedoch mit dem Rechnersystem 21 verbunden, so dass bei der Betätigung eines der Bedienelemente 20 des Bediengeräts 19 ein elektrisches Signal an das Rechnersystem 21 übertragen wird. Dieses übertragene Signal kann in dem Rechnersystem 21 verarbeitet werden und anhand der so erfassten Betätigung des Bediengeräts 19 eine entsprechende Reaktion im Simulationsraum 1 hervorrufen. Beispielsweise können abhängig von der Betätigung des Bediengeräts 19 Feedbackelemente 12 oder Lichtelemente 17 aktiviert werden oder die Position einzelner oder mehrerer Wandelemente 6 verändert werden.

Die obenstehend beschriebenen unterschiedlichen Ausführungsbeispiele eines Wandmoduls 4 sind lediglich als exemplarische Beispiele zu verstehen. Die im Simulationsraum 1 verwendeten Wandmodule können auch eine Mischung aus den in Zusammenhang mit den Ausführungsbeispielen in Fig. 7 bis Fig. 12 beschriebenen Merkmalen und Elementen der Wandmodule 4 aufweisen. Die in Fig. 7 bis 12 beschriebenen Wandmodule 4 können bei einem verschachtelten Wandmodul 4 als Teilmodul 7, insbesondere der niedersten Hierarchieebene 24, zum Einsatz gelangen. Darüber hinaus kann der Simulationsraum 1 eine Mischung aus mehreren, unterschiedlich ausgebildeten Wandmodulen 4 aufweisen.

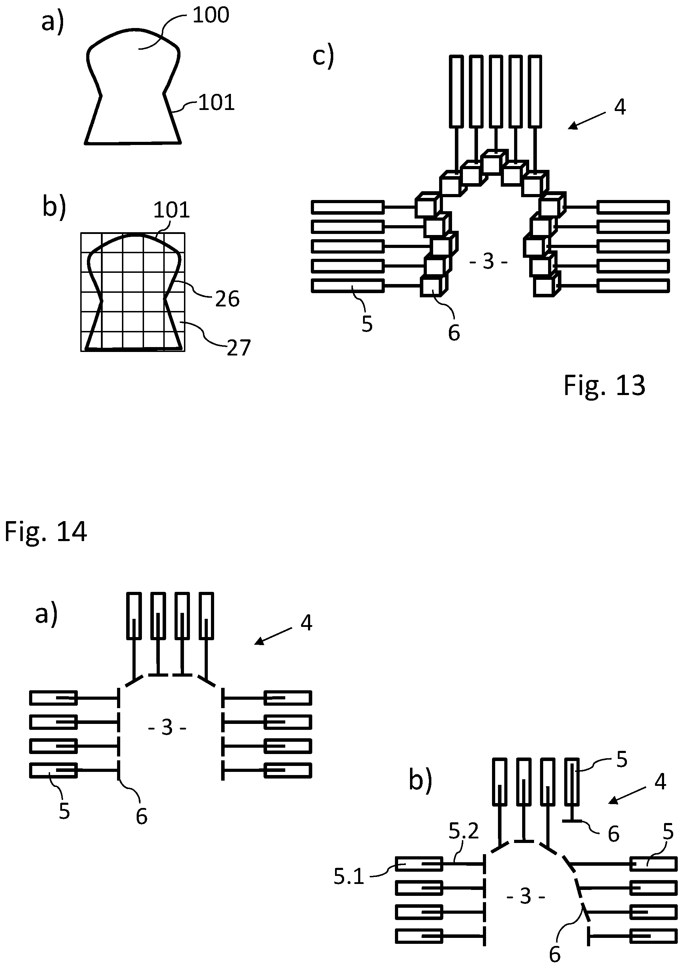

In Fig. 13a bis 13c ist ein Verfahren dargestellt, mit welchem das Fahrzeuginnere 100 mittels der Wandmodule 4 im Simulationsraum 1 nachgebildet werden kann. Fig. 13a zeigt einen Querschnitt durch ein Modell des Fahrzeuginneren 100 entlang einer vertikal verlaufenden Schnittebene. Anhand dieses Modells des nachzubildenden Fahrzeuginneren 100 sollen die Wandelemente 6 der Wandmodule 4 im Simulationsraum 1 positioniert werden.

Hierzu wird das Modell des Fahrzeuginneren 100 mit einem Gitternetz überlagert, dessen Netzmaschen 27 der Auflösung der Wandmodule 4 des Simulationsraums 1 entspricht. Die einzelnen Netzmaschen 27 weisen eine der Fläche der einzelnen Wandelemente 6 zuzüglich des sich zwischen zwei angrenzenden Wandelementen 6 befindlichen Spalts 10 auf. Diese Überlagerung mit den Netzmaschen 27 des Gitternetzes ist in Fig. 13b für den Schnitt durch das Fahrzeuginnere 100 dargestellt, erfolgt gleichwohl im dreidimensionalen Raum, so dass die Netzmaschen 27 einzelnen Quadern, insbesondere Würfel, im dreidimensionalen Raum entsprechen. Anhand der Netzmaschen 27 wird das Modell des Fahrzeuginneren 100 und insbesondere die Fahrzeuginnenwände des Modells in einzelne Segmente 26 zerlegt, welche den in den jeweiligen Netzmaschen 27 befindlichen Teilen der Fahrzeuginnenwand 101 des Modells des Fahrzeuginnenraums 100 entsprechen. Jedem dieser Segmente 26 kann ein Wandelement 6 zugeordnet werden, da die Auflösung der Netzmaschen 27 der Auflösung der im Simulationsraum 1 befindlichen Wandmodule 4 entspricht.

Anhand der einzelnen Segmente 26 können sodann die Wandelemente 6 mittels der Aktuatoren 5 im Simulationsraum 1 zur Begrenzung des Simulationsbereichs 3 positioniert werden, wie dies in Fig. 13c dargestellt ist. Für die Bestimmung der Position der Wandelemente 6 anhand der Segmente 26 können unterschiedliche Verfahren verwendet werden. Beispielsweise kann das Wandelement 6 gemäß der am weitesten fahrzeuginnen oder fahrzeugaußen liegenden Position eines Segments 26 der Fahrzeuginnenwand 101 im Simulationsraum 1 positioniert werden. Ebenfalls ist es möglich, das Wandelement 6 anhand eines Mittelwerts aus den Positionen einzelner zum Segment 26 der Fahrzeuginnenwand 101 gehörigen Punkte im Simulationsraum 1 zu positionieren. Darüber hinaus können die Wandelemente 6, sofern die Wandmodule 4 neigbar ausgebildet sind, auch in ihrer Lage zur realitätsgetreueren Wiedergabe der einzelnen Segmente 26 des Fahrzeuginneren 100 angepasst werden.

Die in Fig. 13 dargestellte Zerlegung des Modells des Fahrzeuginneren 100 in einzelne Segmente 26 kann unabhängig von der Simulation, beispielsweise noch vor beim Einrichten des Rechnersystems 21, erfolgen und in einer Datenbank des Rechnersystems 21 hinterlegt werden. Die Zerlegung wir dabei nicht von dem Rechnersystem 21 selbst durchgeführt. Beim Auswählen eines zu simulierenden Fahrzeuginneren 100 mit dem Rechnersystem 21 werden die den Segmenten 26 entsprechenden Positionen der Wandelemente 6 aus der Datenbank entnommen, so dass eine vollautomatische Positionierung mittels der vom Rechnersystem 21 angesteuerten Aktuatoren 5 erfolgt.

Die Zerlegung in einzelne Segmente 26 kann jedoch auch während der Laufzeit erfolgen, wobei auf dem Rechnersystem 21 ein Modell entweder aus einer Datenbank ausgewählt wird oder das Modell des zu simulierenden Fahrzeuginneren 100 extern in das Rechnersystem 21 geladen wird. Bei dem extern in das Rechnersystem 21 geladenen Modell des Fahrzeuginneren 100 kann es sich beispielsweise um einen 3D-Scan eines realen Fahrzeuginneren 100 handeln. Die während der Laufzeit erfolgende Zerlegung des Modells des Fahrzeuginneren 100 in einzelne Segmente 26 kann durch das Rechnersystem 21 erfolgen. Dies gestattet es, auch noch nicht in einer Datenbank hinterlegte Modelle eines Fahrzeuginneren 100 mit dem Simulationsraum 1 zu simulieren.

Eine dynamische Anpassung der Position der Wandelemente 6 ist in Fig. 14a und 14b dargestellt. Fig. 14a zeigt den Ausgangszustand der im Simulationsraum 1 angeordneten Wandmodule 4. Durch die Wandelemente 6 wird in Fig. 14a ein symmetrisch geformter Simulationsbereich 3 begrenzt. Um nunmehr dynamisch, d. h. während der laufenden Simulation, eine Auswirkung auf das simulierte Fahrzeuginnere 100 zu simulieren, können die Wandelemente 6 durch die vom Rechnersystem 21 angesteuerten Aktuatoren 5 während der Laufzeit in ihrer Position verändert werden.

Eine solche dynamische Anpassung ist in Fig. 14b dargestellt, welche beispielsweise die Auswirkungen durch einen Beschuss auf das Fahrzeuginnere 100 simulieren sollen. Der Simulationsbereich 3 wird durch eine Positionsveränderung der Wandelemente 6 in seiner Größe und Geometrie verändert. In dem hier gezeigten Beispiel der Fig. 14b wird eine durch eine Explosion im oberen Bereich verursachte Deformation des Fahrzeuginneren 100 simuliert. Die im linken oberen Bereich der Figur gezeigten Wandelemente 6 werden in Richtung des Simulationsbereichs 3 durch die Aktuatoren 5 in ihrer Position verändert. Der Simulationsbereich 3 wird nicht nur eingeschränkt, sondern seine zuvor symmetrische Form wird durch die Neupositionierung der Wandelemente 6 hin zu einer asymmetrischen Form verändert.

Wie in Fig. 14b dargestellt, ist es nicht erforderlich, dass sämtliche Wandelemente 6 des Simulationsraums 1 zur Beschränkung des Simulationsbereichs 3 eingesetzt werden. So wird beispielsweise in Fig. 14b das im Dachbereich angeordnete rechte Wandmodul 4 zur Begrenzung des deformierten Simulationsbereichs 3 nicht genutzt, obwohl dieses Wandmodul 4 bei der Begrenzung des nicht-deformierten Simulationsbereichs 3 in Fig. 14a genutzt wurde. Das entsprechende Wandelement 6 wird durch Überführung des Aktuators 5 in seine maximal eingefahrene Position in eine Ruhestellung gebracht, aus welcher es jedenfalls wieder herausgefahren werden kann, sollte es im weiteren Simulationsverlauf erneut zur Begrenzung des Simulationsbereichs 3, beispielsweise bei einer weiteren dynamischen Veränderung, genutzt werden.

Bei den als Teleskopelementen ausgebildeten Aktuatoren 5 der Fig. 14 sind zudem die gegeneinander bewegbaren und ineinander schiebbaren Komponenten 5.1, 5.2 der Aktuatoren 5 angedeutet. Die erste Komponente 5.1 des Aktuators 5 ist nach Art eines Zylinders ausgebildet. In die erste Komponente 5.1 kann die zweite, als Kolben ausgebildete Komponente 5.2 hineinbewegt oder aus ihr hinausbewegt werden. Die Komponenten 5.1, 5.2 bilden einen Aktuator 5 nach Art eines Hydraulik- oder Pneumatikzylinders.

Wie in Fig. 14b dargestellt, wird der Simulationsbereich 3 bei der dynamischen Anpassung nicht nur durch eine Neupositionierung der Wandelemente 6 verändert. Die Wandelemente 6 werden auch in ihrer Lage angepasst, um das nunmehr deformierte Fahrzeuginnere 100 realitätsgetreuer zu simulieren.

Mit Hilfe des vorstehend beschriebenen modularen Simulationsraums 1 sowie des Verfahrens zum Betrieb des Simulationsraums 1 wird ein schneller und einfacher an unterschiedliche Fahrzeugtypen anpassbarer Simulationsraum 1 bereitgestellt.

### Bezugszeichen:

- 1: Simulationsraum
- 2: Wand
- 2.1: Seitenwand
- 2.2: Decke
- 2.3: Fußboden
- 3: Simulationsbereich
- 4: Wandmodul
- 5: Aktuator
- 5.1: Komponente
- 5.2: Komponente
- 6: Wandelement
- 6.1: Befestigungselement
- 7: Teilmodul
- 8: Abschlusselement
- 9: Marker
- 10: Spalt
- 11: Oberflächenelement
- 11.1: Befestigungselement
- 12: Feedbackelement
- 13: Akustikelement
- 14: Vibrationselement
- 15: Formveränderungselement
- 15.1: Schlauch
- 15.2: Reservoir
- 16: Temperaturelement
- 17: Lichtelement
- 18: drucksensitives Element
- 19: Bediengerät
- 20: Bedienelement
- 21: Rechnersystem
- 22: höchste Hierarchieebene
- 23: Zwischenhierarchieebene
- 24: niederste Hierarchieebene
- 25: Sitzmöglichkeit
- 26: Segment
- 27: Netzmasche
- 28: Adressraum
- 29: Adressraum
- 30: Adressraum
- 31: Adressraum
- 40: Aktuatorenblock
- 100: Fahrzeuginnere
- 101: Fahrzeuginnenwand

- A1: Achse
- A2: Achse
- D: Ausdehnungsrichtung
- N: Oberflächennormale
- T: Translationsachse
- α: Winkel

## Patentansprüche

1. Modularer Simulationsraum zur Simulation eines Fahrzeuginneren (100), insbesondere eines militärischen Fahrzeugs, mit mehreren Wandmodulen (4) zur Begrenzung eines Simulationsbereichs (3) im Simulationsraum (1),
**dadurch gekennzeichnet,**
**dass** die Wandmodule (4) Aktuatoren (5) zur, insbesondere translatorischen, Positionsveränderung simulationsbereichsseitiger Wandelemente (6) der Wandmodule (4) im Simulationsraum (1) aufweisen und dass die Wandmodule (4), insbesondere über Aktuatoren, neigbar sind, wobei die Wandelementen (6) neigbar ausgebildet sind.

2. Modularer Simulationsraum nach Anspruch 1, **dadurch gekennzeichnet, dass** die Aktuatoren (5) als Teleskopelement ausgebildet sind.

3. Modularer Simulationsraum nach einem der vorhergehenden Ansprüche, **dadurch gekennzeichnet, dass** die Wandmodule (4) um je zwei im Wesentlichen orthogonale Achsen (A1, A2) neigbar sind.

4. Modularer Simulationsraum nach einem der vorhergehenden Ansprüche, **dadurch gekennzeichnet, dass** die Wandmodule (4) Marker (9) zur Positionsbestimmung aufweisen.

5. Modularer Simulationsraum nach einem der vorhergehenden Ansprüche, **dadurch gekennzeichnet, dass** die Wandmodule (4) matrixartig angeordnet sind.

6. Modularer Simulationsraum nach einem der vorhergehenden Ansprüche, **dadurch gekennzeichnet, dass** die Wandmodule (4) mit mehreren Teilmodulen (7) hierarchisch aufgebaut sind.

7. Modularer Simulationsraum nach einem der vorhergehenden Ansprüche, **dadurch gekennzeichnet, dass** mindestens ein Wandmodul (4) ein Oberflächenelement (11) zur realitätsgetreuen Nachbildung des Fahrzeuginneren (100) aufweist.

8. Modularer Simulationsraum nach einem der vorhergehenden Ansprüche, **dadurch gekennzeichnet, dass** mindestens ein Wandmodul (4) ein Feedbackelement (12) für ein aktives Feedback aufweist.

9. Modularer Simulationsraum nach einem der vorhergehenden Ansprüche, **dadurch gekennzeichnet, dass** mindestens ein Wandmodul (4) ein drucksensitives Element (18) aufweist.

10. Modularer Simulationsraum nach einem der vorhergehenden Ansprüche, **dadurch gekennzeichnet, dass** mindesten ein Bediengerät (19) zur Nachbildung eines Fahrzeugbediengeräts an den Wandelementen (6) anordbar ist.

11. Verfahren zum Betrieb eines Simulationsraums (1) nach Anspruch 1,
**dadurch gekennzeichnet,**
**dass** die Aktuatoren (5) zur Positionsveränderung der Wandelemente (6) über ein Rechnersystem (21) angesteuert werden.

12. Verfahren nach Anspruch 11, **dadurch gekennzeichnet, dass** die Aktuatoren (5) auf Basis eines Modells des nachzubildenden Fahrzeuginneren (100) angesteuert werden.

13. Verfahren nach Anspruch 12, **dadurch gekennzeichnet, dass** das Modell des Fahrzeuginneren (100) in Segmente (26) zerlegt wird, welche einer Auflösung der Wandelemente (6) entspricht.

14. Verfahren nach einem der Ansprüche 11 bis 13, **dadurch gekennzeichnet, dass** die Aktuatoren (5) hierarchisch angesteuert werden.

15. Verfahren nach Anspruch 14, **dadurch gekennzeichnet, dass** jeder Hierarchieebene (22, 23, 24) einen eigener Adressraum (28, 29, 30, 31) zur Ansteuerung zugewiesen wird.

## Claims

1. Modular simulation room for simulating a vehicle interior (100), in particular of a military vehicle, with a plurality of wall modules (4) for delimiting a simulation area (3) in the simulation room (1), **characterized in that**
the wall modules (4) have actuators (5) for, in particular translational, position change of simulation-area-side wall elements (6) of the wall modules (4) in the simulation room (1), and **in that** the wall modules (4), in particular via actuators, are tiltable, wherein the wall elements (6) are configured to be tiltable.

2. Modular simulation room according to claim 1, **characterized in that** the actuators (5) are configured as a telescopic element.

3. Modular simulation room according to one of the preceding claims, **characterized in that** the wall modules (4) are tiltable about respectively two substantially orthogonal axes (A1, A2).

4. Modular simulation room according to one of the preceding claims, **characterized in that** the wall modules (4) have markers (9) for position determination.

5. Modular simulation room according to one of the preceding claims, **characterized in that** the wall modules (4) are arranged in a matrix-like manner.

6. Modular simulation room according to one of the preceding claims, **characterized in that** the wall modules (4) are hierarchically constructed with a plurality of submodules (7).

7. Modular simulation room according to one of the preceding claims, **characterized in that** at least one wall module (4) has a surface element (11) for realistic reproduction of the vehicle interior (100).

8. Modular simulation room according to one of the preceding claims, **characterized in that** at least one wall module (4) has a feedback element (12) for active feedback.

9. Modular simulation room according to one of the preceding claims, **characterized in that** at least one wall module (4) has a pressure-sensitive element (18).

10. Modular simulation room according to one of the preceding claims, **characterized in that** at least one operating device (19) for reproducing a vehicle operating device is arrangeable on the wall elements (6).

11. Method for operating a simulation room (1) according to claim 1,
**characterized in that**
the actuators (5) for changing the position of the wall elements (6) are controlled via a computer system (21).

12. Method according to claim 11, **characterized in that** the actuators (5) are controlled on the basis of a model of the vehicle interior (100) to be reproduced.

13. Method according to claim 12, **characterized in that** the model of the vehicle interior (100) is divided into segments (26), which corresponds to a resolution of the wall elements (6).

14. Method according to one of the claims 11 to 13, **characterized in that** the actuators (5) are controlled hierarchically.

15. Method according to claim 14, **characterized in that** each hierarchy level (22, 23, 24) is assigned its own address space (28, 29, 30, 31) for control.

## Revendications

1. Chambre de simulation modulaire pour simuler un intérieur de véhicule (100), en particulier d'un véhicule militaire, avec plusieurs modules de paroi (4) pour délimiter une zone de simulation (3) dans la chambre de simulation (1),
**caractérisée en ce**
**que** les modules de paroi (4) comportent des actionneurs (5) pour modifier la position, en particulier par translation, d'éléments de paroi (6) côté zone de simulation des modules de paroi (4) dans la chambre de simulation (1) et que les modules de paroi (4) peuvent être inclinés, en particulier par des actionneurs, les éléments de paroi (6) étant formés de manière à pouvoir être inclinés.

2. Chambre de simulation modulaire selon la revendication 1, **caractérisée en ce que** les actionneurs (5) sont formés comme élément télescopique.

3. Chambre de simulation modulaire selon l'une des revendications précédentes, **caractérisée en ce que** les modules de paroi (4) peuvent être inclinés autour de respectivement deux axes sensiblement orthogonaux (A1, A2).

4. Chambre de simulation modulaire selon l'une des revendications précédentes, **caractérisée en ce que** les modules de paroi (4) comportent des marqueurs (9) pour déterminer la position.

5. Chambre de simulation modulaire selon l'une des revendications précédentes, **caractérisée en ce que** les modules de paroi (4) sont disposés à la manière d'une matrice.

6. Chambre de simulation modulaire selon l'une des revendications précédentes, **caractérisée en ce que** les modules de paroi (4) sont élaborés de manière hiérarchique avec plusieurs sous-modules (7).

7. Chambre de simulation modulaire selon l'une des revendications précédentes, **caractérisée en ce qu'**au moins un module de paroi (4) comporte un élément de surface (11) pour reproduire fidèlement à la réalité l'intérieur de véhicule (100).

8. Chambre de simulation modulaire selon l'une des revendications précédentes, **caractérisée en ce qu'**au moins un module de paroi (4) comporte un élément de retour (12) pour un retour actif.

9. Chambre de simulation modulaire selon l'une des revendications précédentes, **caractérisée en ce qu'**au moins un module de paroi(4) comporte un élément sensible à la pression (18).

10. Chambre de simulation modulaire selon l'une des revendications précédentes, **caractérisée en ce qu'**au moins un appareil de commande (19) peut être disposé sur les éléments de paroi (6) pour reproduire un appareil de commande de véhicule.

11. Procédé destiné à faire fonctionner une chambre de simulation (1) selon la revendication 1, **caractérisé en ce que** les actionneurs (5) sont pilotés pour modifier la position des éléments de paroi (6) par un système informatique (21).

12. Procédé selon la revendication 11, **caractérisé en ce que** les actionneurs (5) sont pilotés sur la base d'un modèle de l'intérieur de véhicule (100) à reproduire.

13. Procédé selon la revendication 12, **caractérisé en ce que** le modèle de l'intérieur de véhicule (100) est décomposé en segments (26) qui correspond à une résolution des éléments de paroi (6).

14. Procédé selon l'une des revendications 11 à 13, **caractérisé en ce que** les actionneurs (5) sont pilotés de manière hiérarchique.

15. Procédé selon la revendication 14, **caractérisé en ce qu'**un espace d'adressage propre (28, 29, 30, 31) pour le pilotage est attribué à chaque niveau hiérarchique (22, 23, 24).
